# EUROPEAN PATENT SPECIFICATION

(11) **EP 2 602 189 B1**
(45) Date of publication and mention of the grant of the patent: **16.03.2016**
(21) Application number: 11192528.5
(22) Date of filing: 08.12.2011
(51) Int. Cl.: B60N 2/23, B64D 11/06, B64D 11/00, B64D 45/00

(54) **Seat system**
Sitzsystem
Système de siège

(43) Date of publication of application: 12.06.2013
(73) Proprietor: Airbus SAS, 31707 Blagnac (FR)
(72) Inventor: Ly, Vinh, 31300 Toulouse (FR)
(74) Representative: Gicquel, Olivier Yves Gérard

(56) References cited:
- EP-A1- 2 174 837
- WO-A2-2007/042740
- WO-A2-2010/080178
- DE-A1-102004 025 319
- DE-A1-102006 030 193
- US-A1- 2004 195 875

## Description

### FIELD OF THE INVENTION

The present invention relates to a method of unlocking a recline actuator of a seat back, and an associated seat system. The invention also relates to a method of enhancing security on an aircraft, and an associated seat system.

### BACKGROUND OF THE INVENTION

US 2010/0031761 or WO2010080178 discloses a seat comprising a seat base; a seat back; and a recline actuator arranged to enable the seat back to be reclined relative to the seat base.

### SUMMARY OF THE INVENTION

The application discloses a method of unlocking a recline actuator of a seat back, the method comprising: receiving a request from a user to unlock a recline actuator of the seat back; responding to the request by conducting a transaction with the user, said transaction comprising sending one or more messages to the user via an electronic display device and receiving one or more responses from the user via a user input device; and automatically unlocking the recline actuator on completion of said transaction, thereby enabling the user to recline the seat back using the unlocked recline actuator.

The application discloses also a method of controlling a user's ability to recline the seat back, which can supplement an actuator such as the user-operated mechanical switch described in US 2010/0031761. The transaction may simply consist of a single message to the user and a single response from the user. For instance the message to the user may be: "do you want to recline the seat?" and the transaction may be completed by a single affirmative response from the user. Alternatively the message to the user may be: "do you want to recline the seat in return for 1000 air miles?" and the transaction may be completed by a single affirmative response from the user. Alternatively the transaction may comprise a longer sequence of communications between a control device and the user - for instance including a credit card transaction or other payment process.

Optionally the method may further comprise informing a second user immediately behind the first seat back via a second electronic display device that the first user has requested that the recline actuator of the seat back be unlocked and/or that the recline actuator has or will be unlocked. This may simply be used to inform the second user, or may initiate a bid/counter-bid process. For example the transaction may further comprise receiving a first counter bid from the second user via a second user input device; sending the first counter bid to the first user via the first electronic display device; receiving a second counter bid from the first user via the first user input device in response to the first counter bid; and receiving an indication from the second user via the second user input device that they do not wish to make a further counter bid. The user input device and/or electronic display device may be part of an entertainment system associated with the seat. Alternatively the user input device and/or electronic display device may be a laptop or other portable device owned by the user and communicating via a wired or wireless connection.

The request to unlock the recline actuator of the seat back may be received from the user via the same user input device that is used to conduct the transaction. Alternatively the request may be received by some other user input device, or directly via the recline actuator.

The motive force for reclining the seat back may be provided by the user, or by an electric motor which may be part of the recline actuator.

A motor may be operated to force the seat back to an upright position after a predetermined time has elapsed from the time that the seat is reclined or from the time that the recline actuator is unlocked.

Preferably the recline actuator comprises a clutch brake; a wire which can be moved to release the clutch brake thereby enabling the user to recline the seat back; and a pair of locking members, wherein the control unit is arranged to unlock the recline actuator by rearranging the pair of locking members from a locked position in which they compress the wire between them to an unlocked position in which the wire can move to release the clutch brake.

The apllication discloses a seat system comprising a seat base; a seat back; a recline actuator arranged to enable the seat back to be reclined relative to the seat base; a locking mechanism arranged to lock the recline actuator; and a control unit arranged to: receive a request from a user to unlock a recline actuator of the seat back, respond to the request by conducting a transaction with the user, said transaction including: sending one or more messages to the user via a electronic display device, and receiving one or more responses from the user via a user input device; and automatically unlock the recline actuator on completion of said transaction, thereby enabling the user to recline the seat back using the unlocked recline actuator.

The recline actuator, locking mechanism and control unit may be integrated into a single seat unit along with the seat base and seat back, or they may be positioned remotely from the seat base and the seat back.

The method and the seat system may be employed on a vehicle such as a bus or aircraft; or in any other environment.

The application discloses a method of enhancing security on an aircraft, the method comprising: detecting with a sensor that a back of a seat on the aircraft is reclined; and outputting a warning via an electronic display device if the sensor detects that the back of the seat is reclined during takeoff or landing of the aircraft.

Preferably the aircraft has a plurality of seats, and the method comprising detecting with one or more sensors which of the seats is a reclined seat with its back reclined; outputting a warning to each passenger in each of said reclined seats via a different respective display device; and displaying a map on a flight attendant panel, said map indicating which of the seats is a reclined seat.

The application discloses a seat system installed on an aircraft, the seat system comprising a seat base; a seat back; a recline actuator arranged to enable the seat back to be reclined relative to the seat base; a sensor arranged to detect that the seat back is reclined relative to the base; an electronic display device; and a control unit arranged to outputting a warning via the electronic display device if the sensor indicates to the control unit that the seat back is reclined relative to the seat back during takeoff or landing of the aircraft.

The sensor may be remote from the seat base and the seat back - for instance it may comprise an optical sensor which remotely senses when the seat back reclines and interrupts a beam of light. Alternatively the sensor may be integrated within the seat base and/or seat back. For instance the sensor may comprise a first part and a second part (for instance electrodes or contact switches) which are in contact when the seat back is fully upright; and wherein the parts come out of contact when the seat back reclines relative to the seat base.

The application discloses a method of enhancing security on an aircraft, the method comprising: detecting with a sensor that a back of a seat on the aircraft is reclined; and operating a motor to force the seat back to an upright position if the sensor detects that the seat back is reclined during takeoff or landing of the aircraft.

The application discloses a seat system installed on an aircraft, the seat system comprising a seat base; a seat back which can be reclined relative to the base from an upright position to a reclined position; a motor; a sensor arranged to detect that the seat back is reclined relative to the base; and a control unit arranged to operate the motor to force the seat back to the upright position if the sensor detects that the seat back is reclined during takeoff or landing of the aircraft.

### BRIEF DESCRIPTION OF THE DRAWINGS

Embodiments of the invention will now be described with reference to the accompanying drawings, in which:
Figure 1 is a schematic view of a seat in an upright position;
Figure 2 shows the seat in a reclined position;
Figure 3 shows the electronics architecture onboard an aircraft;
Figure 4 shows an IFE in detail;
Figure 5 shows an FAP in detail; and
Figure 6 is a schematic view of an alternative seat in an upright position.

### DETAILED DESCRIPTION OF EMBODIMENT(S)

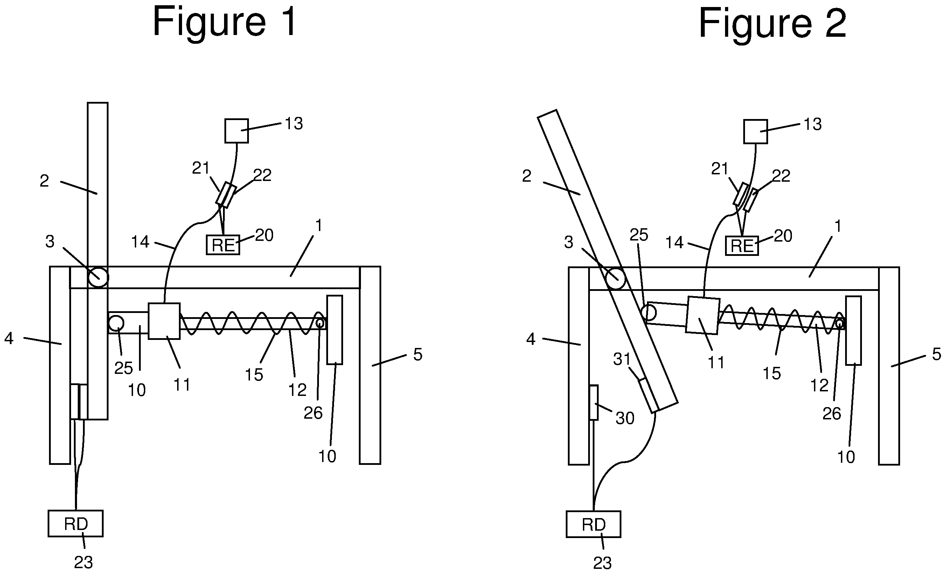

Figure 1 shows a seat with a base 1, a back 2 mounted to the base at a pivot 3, and legs 4, 5. The seat has an actuator of the kind described in US 2010/0031761 which is arranged to enable the seat back 2 to be reclined relative to the seat base 1.

The actuator has a tubular member 10 with a housing 11 at one end. The housing 10 has an opening and a threaded lead screw 12 is received in the opening. A cylindrical drive nut (not shown) is mounted for rotation within the housing. The drive nut has a female thread that mates with the male thread on the lead screw 12 so that the lead screw 12 can move axially within the opening as the nut rotates within the housing. A spring clutch brake (not shown) can be moved from a first position in which it restrains the drive nut to a second release position in which the drive nut can rotate. The clutch brake is moved from its first position to its release position by pressing a button 13 which moves a wire 14 connected to the clutch brake. A compression spring 15 encircles the lead screw and urges the actuator to its fully extended home position shown in Figure 1.

A locking mechanism is provided to lock the recline actuator. A pair of locking members 21, 22 are positioned on opposite sides of the wire 14 and biased towards a locked position shown in Figure 1 in which the locking members 21, 22 compress the wire between them and prevent the wire 14 from moving to release the clutch brake. A recline enable actuator 20 is coupled to the locking members 21, 22 and can be operated by an electrical signal to rearrange the locking members (by moving one or both of the locking members away from the wire 14) to the unlocked position shown in Figure 2 in which the wire 14 can move to release the clutch brake.

When the clutch brake is released by pressing the button 13, a user leans back on the seat back 2 which rotates about pivot 3. At the same time the actuator shortens and rotates about pivots 25, 26 to the position shown in Figure 2. As it does so the lead screw 12 moves into the housing 11 and tubular member 10, and the compression spring 15 becoming more compressed.

A recline detect system is also provided, comprising a pair of electrodes 30, 31 fitted to the leg 4 and back 3 respectively. When the seat is fully upright as in Figure 1, the electrodes 30, 31 are in contact, closing a circuit including a recline detection sensor 23. When the seat reclines to the position shown in Figure 2, the electrodes 30, 31 come out of contact, opening the circuit so the sensor 23 senses that the seat has become at least partially reclined.

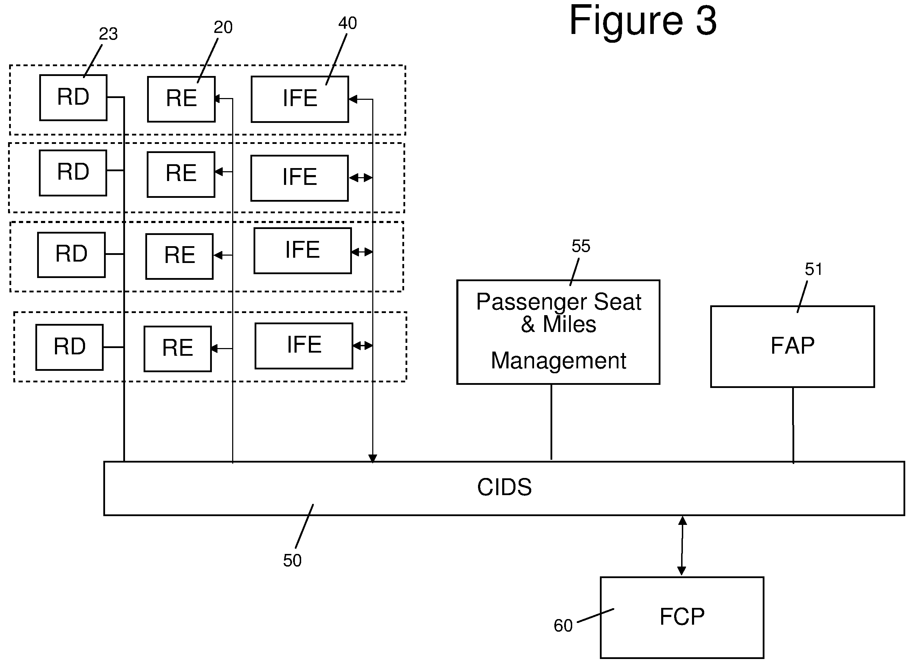

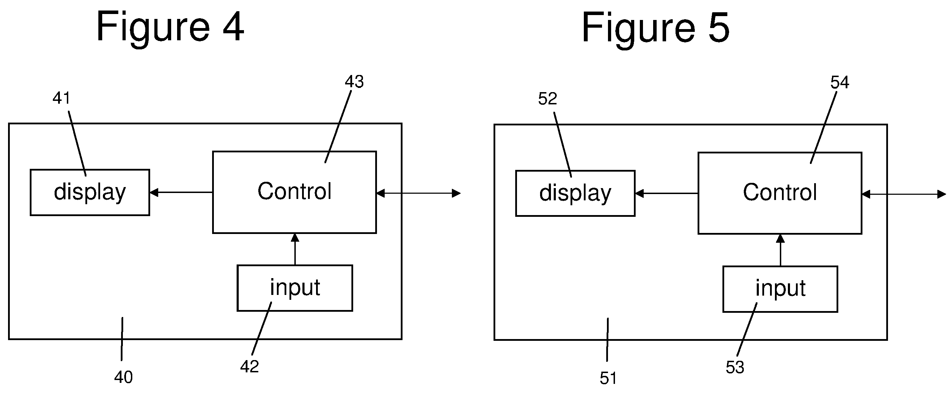

The recline enable (RE) actuator 20 and recline detection (RD) sensor 23 are integrated into an aircraft electronics system shown in Figure 3. Each seat has an inflight entertainment system (IFE) 40 shown in detail in Figure 4, comprising an electronic display 41, input device 42 (such as a keyboard or touch screen) and control processor 43. The seat of Figure 1 is one of a number of seats in the cabin of the aircraft, and Figure 3 shows the RE actuator 20, RD sensor 23 and IFE 40 for three additional seats by way of example.

The RE actuators 20, RD sensors 23 and IFEs 40 are each connected to a cabin intercommunication data system 50. The system 50 is also connected to a flight attendant panel (FAP) 51 shown in detail Figure 5, comprising an electronic display 52, input device 53 and control processor 54.

The system 50 is also connected to a passenger seat and miles management processor 55 which acts as a central control unit for conducting transactions with the passengers and unlocking the recline actuators of their seats.

Finally, the system 50 is connected to a flight control computer 60 which determines whether the aircraft is in a take-off or landing phase.

The system of Figure 3 operates in a number of different scenarios as follows.

### Scenario 1

1. Passenger inputs a request into IFE via input device 42 to unlock the recline actuator of the seat back.
2. IFE control processor 43 contacts flight control computer 60 which informs IFE control processor 43 that the aircraft is in a take-off or landing phase.
3. IFE control processor 43 informs passenger via display 41 that the seat cannot be reclined during take-off or landing.
4. Brakes 21, 22 remain locked to prevent passenger from reclining seat.

### Scenario 2

1. Flight control computer 60 determines that the aircraft is in a take-off or landing phase.
2. Flight control computer 60 polls recline detection sensors 23 to determine which seats are reclined.
3. Flight control computer 60 instructs IFE 40 of each reclined seat to display a warning message.
4. IFE 40 of each reclined seat displays a warning message "please put your seat in the upright position".
5. After one minute, flight control computer 60 polls recline detection sensors 23 to determine which seats are still reclined.
6. If some seats remain reclined, flight control computer 60 informs FAP 51 which seats are still reclined, and FAP 51 displays map on display device 52 indicating in red to cabin attendant which seats are still reclined so the cabin attendant can take action.

### Scenario 3

1. At take-off and boarding, a database in the management processor 55 is synchronized with the airline database.
2. During flight, passenger inputs a request into IFE via input device 42 to unlock the recline actuator of the seat back.
3. IFE control processor 43 contacts flight control computer 60 which informs IFE control processor 43 that the aircraft is not in a take-off or landing phase.
4. Management processor 55 responds to passenger's request by informing passenger via display 41 of IFE that the seat can be reclined in return for X air miles or Y dollars.
5. Passenger responds via input device 42, either accepting offer of X air miles or offer of Y dollars.
6. Management processor 55 stores in database the number of air miles X to be deducted, or conducts credit card transaction with passenger via IFE to receive payment of Y dollars.
7. Management processor 55 instructs IFE to display a message "Mr XXX, thank you for confirming that you are selecting the reclinability option". This completes the transaction.
8. Management processor 55 then automatically instructs recline enable actuator 20 to release brakes 21, 22.
9. Passenger reclines seat.
10. When recline detection sensor 23 detects that the seat has been reclined, then the management processor 55 instructs IFE in the seat immediately behind the seat which has been reclined to display the message "For the inconvenience we would like to offer you W miles or an extra drink. Please make your choice".
11. After the flight, the database in the management processor 55 is synchronized with the airline database.

### Scenario 4

Scenario 4 is identical to scenario 3, but includes bid/counter-bid functionality.
1. At take-off and boarding, database in the management processor 55 is synchronized with the airline database.
2. First passenger inputs a request into IFE via input device 42 to unlock the recline actuator of the seat back.
3. IFE control processor 43 contacts flight control computer 60 which informs IFE control processor 43 that the aircraft is not in a take-off or landing phase.
4. Management processor 55 responds to first passenger's request by informing first passenger via display 41 of IFE that the seat can be reclined in return for X air miles or Y dollars.
5. First passenger responds via input device 42, either accepting offer of X air miles or offer of Y dollars.
6. Management processor 55 instructs IFE in the seat immediately behind the seat which is to be reclined to display a message to a second passenger: "the passenger in front of you would like to recline his seat and has made a bid X/Y. Would you like to make a counter bid? Please make your choice".
7. Second passenger responds via input device 42, either declining to counter-bid, or making a counter-bid of X1 air miles or Y1 dollars.
8. Management processor 55 instructs IFE in the seat of the first passenger to display a message "the passenger behind you has made a counter-bid of X1 air miles or Y1 dollars. Would you like to make a counter bid? Please make your choice".
9. First passenger responds via input device 42, either declining to counter-bid, or making a higher counter-bid of X2 air miles or Y3 dollars.
10. Steps 4-9 repeat until one of the passengers indicates that they do not wish to counter bid.
11. Management processor 55 stores number of air miles to be deducted, or conducts credit card transaction with winning passenger via IFE to receive payment.
12. If seat is to be reclined, then management processor 55 instructs IFE to display a message "Mr XXX, thank you for confirming that you are selecting the reclinability option". This completes the transaction.
13. Management processor 55 then automatically instructs recline enable actuator 20 to release brakes 21, 22.
14. Passenger reclines seat.
15. After the flight, the database in the management processor 55 is synchronized with the airline database.

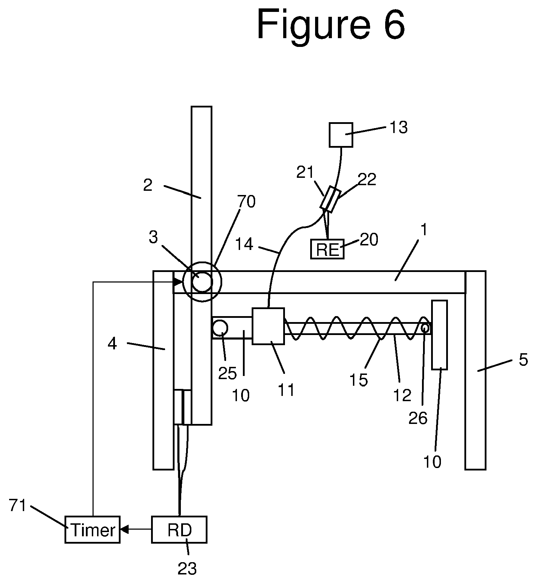

Figure 6 shows a seat according to a further embodiment of the present invention. The seat is similar to the seat of Figure 1, and identical features are given the same reference number. In the seat of Figure 6, the seat back 2 can be rotated about the pivot 3 to its reclined position by the weight of the user, and from its reclined position to its upright position by an electric motor 70.

In scenarios 3 and 4, the transaction is completed in a similar manner, but the seat is only reclined for a certain time T. When the transaction is complete, then the management processor 55 automatically instructs the recline enable actuator 20 to release brakes 21, 22. The passenger then reclines the seat using the weight of his body. The recline detector 23 detects that the seat has reclined and starts a timer 71. After the time T has elapsed, the timer 71 instructs the motor 70 to force the seat to its upright position.

Also in scenario 2, if some seats remain reclined then at step 6 the flight control computer 60 can operate the motor 70 of each reclined seat to force the seat to its upright position.

Although the invention has been described above with reference to one or more preferred embodiments, it will be appreciated that various changes or modifications may be made without departing from the scope of the invention as defined in the appended claims.

## Claims

1. A seat system installable on an aircraft, the seat system comprising a seat base (1); a seat back (2); a recline actuator arranged to enable the seat back to be reclined relative to the seat base; a locking mechanism (21,22) arranged to lock the recline actuator; and a control unit (40, 60), **characterized in that** the control unit is arranged to:
a. receive a request from a user to unlock a recline actuator of the seat back,
b. respond to the request by conducting a transaction with the user, said transaction including:
i. sending one or more messages to the user via a electronic display device, and
ii. receiving one or more responses from the user via a user input device; and
c. automatically unlock the recline actuator on completion of said transaction, thereby enabling the user to recline the seat back using the unlocked recline actuator,
and **in that** the recline actuator comprises a clutch brake; a wire (14) which can be moved to release the clutch brake thereby enabling the user to recline the seat back; and a pair of locking members (21,22), wherein the control unit is arranged to unlock the recline actuator by rearranging the pair of locking members from a locked position in which they compress the wire between them to an unlocked position in which the wire can move to release the clutch brake.

2. The system of claim 1 **characterized in that** the system further comprises a sensor (23) arranged to detect that the seat back is reclined relative to the base; an electronic display device; and a control unit (40,60) arranged to outputting a warning via the electronic display device if the sensor indicates to the control unit that the seat back is reclined relative to the seat base during takeoff or landing of the aircraft.

3. The system of claim 2 wherein the sensor comprises a first part (30) and a second part (31) which are in contact when the seat back is fully upright; and wherein the parts come out of contact when the seat back reclines relative to the seat base.

4. The system of claim 2 or claim 3 further comprising a timer (71); and a motor (70), wherein the seat system is configured to operate the motor to force the seat back to an upright position after the timer indicates that a predetermined time has elapsed or if the sensor detects that the seat back is reclined during takeoff or landing of the aircraft.

## Patentansprüche

1. Sitzsystem, das in ein Flugzeug eingebaut werden kann, wobei das Sitzsystem eine Sitzfläche (1); eine Sitzlehne (2); einen Lehnenverstellaktuator, der ausgelegt ist, zu ermöglichen, dass die Sitzlehne in Bezug auf die Sitzfläche geneigt werden kann; einen Blockiermechanismus (21, 22), der ausgelegt ist, den Lehnenverstellaktuator zu blockieren; und eine Steuereinheit (40, 60) umfasst, **dadurch gekennzeichnet, dass** die Steuereinheit für Folgendes ausgelegt ist:
a. Empfangen einer Anforderung von einem Benutzer, einen Lehnenverstellaktuator der Sitzlehne freizugeben,
b. Antworten auf die Anforderung durch Ausführen eines Vorgangs mit dem Benutzer, wobei der Vorgang die folgenden Schritte umfasst:
i. Senden einer oder mehrerer Nachrichten an den Benutzer über eine elektronische Anzeigevorrichtung, und
ii. Empfangen einer oder mehrerer Antworten von dem Benutzer über eine Benutzereingabevorrichtung; und
c. automatisches Freigeben des Lehnenverstellaktuators bei der Beendigung des Vorgangs, wodurch ermöglicht wird, dass der Benutzer die Sitzlehne unter Verwendung des freigegebenen Lehnenverstellaktuators neigt,
und dass der Lehnenverstellaktuator eine Kupplungsbremse; einen Draht (14), der bewegt werden kann, um die Kupplungsbremse freizugeben, wodurch ermöglicht wird, dass der Benutzer die Sitzlehne neigt; und ein Paar Blockierelemente (21, 22) umfasst, wobei die Steuereinheit ausgelegt ist, den Lehnenverstellaktuator durch Umlagern des Paars Blockierelemente von einer Einrastposition, in der sie den Draht zwischen sich zusammendrücken, in eine freigegebene Position, in der sich der Draht bewegen kann, um die Kupplungsbremse freizugeben, freizugeben.

2. System nach Anspruch 1, **dadurch gekennzeichnet, dass** das System ferner einen Sensor (23), der ausgelegt ist, zu detektieren, dass die Sitzlehne in Bezug auf die Fläche geneigt ist; eine elektronische Anzeigevorrichtung; und eine Steuereinheit (40, 60) umfasst, die ausgelegt ist, über die elektronische Anzeigevorrichtung eine Warnung auszugeben, falls der Sensor der Steuereinheit anzeigt, dass während eines Starts oder einer Landung des Flugzeugs die Sitzlehne in Bezug auf die Fläche geneigt ist.

3. System nach Anspruch 2, wobei der Sensor ein erstes Bauteil (30) und ein zweites Bauteil (31) umfasst, die in Kontakt sind, wenn die Sitzlehne vollständig aufgerichtet ist; und wobei die Bauteile keinen Kontakt mehr haben, wenn die Sitzlehne in Bezug auf die Sitzfläche geneigt ist.

4. System nach Anspruch 2 oder Anspruch 3, das ferner einen Zeitschalter (71); und einen Motor (70) umfasst, wobei das Sitzsystem konfiguriert ist, den Motor zu betätigen, um die Sitzlehne in eine aufrechte Position zu zwingen, nachdem der Zeitschaler anzeigt, dass eine vorher festgelegte Zeit verstrichen ist, oder falls der Sensor detektiert, dass die Sitzlehne während eines Starts oder einer Landung des Flugzeugs geneigt ist.

## Revendications

1. Système de siège pouvant être installé dans un aéronef, le système de siège comprenant une base de siège (1) ; un dossier de siège (2) ; un dispositif d'actionnement d'inclinaison conçu pour permettre au dossier de siège d'être incliné par rapport à la base de siège ; un mécanisme de verrouillage (21, 22) conçu pour verrouiller le dispositif d'actionnement d'inclinaison ; et une unité de commande (40, 60), **caractérisé en ce que** l'unité de commande est conçue pour :
a. recevoir une requête émanant d'un utilisateur pour le déverrouillage du dispositif d'actionnement d'inclinaison du dossier de siège,
b. répondre à la requête en effectuant une transaction avec l'utilisateur, ladite transaction comprenant :
i. envoyer un ou plusieurs messages à l'utilisateur par le biais d'un dispositif d'affichage électronique, et
ii. recevoir une ou plusieurs réponses de la part de l'utilisateur par le biais d'un dispositif de saisie utilisateur ; et
c. déverrouiller automatiquement le dispositif d'actionnement d' inclinaison lorsque ladite transaction est terminée, de façon à permettre ainsi à l'utilisateur d'incliner le dossier de siège au moyen du dispositif d'actionnement d'inclinaison déverrouillé,
et **en ce que** le dispositif d'actionnement d'inclinaison comprend un embrayage-frein ; un fil (14) qui peut être déplacé afin de libérer l'embrayage-frein de façon à permettre ainsi à l'utilisateur d'incliner le dossier de siège ; et une paire d'organes de verrouillage (21, 22), l'unité de commande étant conçue pour déverrouiller le dispositif d'actionnement d'inclinaison en repositionnant la paire d'organes de verrouillage d'une position verrouillée dans laquelle ils compriment le fil entre eux à une position déverrouillée dans laquelle le fil peut être déplacé pour libérer l'embrayage-frein.

2. Système selon la revendication 1 **caractérisé en ce qu'**il comprend en outre un capteur (23) conçu pour détecter que le dossier de siège est incliné par rapport à la base ; un dispositif d'affichage électronique ; et une unité de commande (40, 60) conçue pour émettre un avertissement par le biais du dispositif d'affichage électronique si le capteur indique à l'unité de commande que le dossier de siège est incliné par rapport à la base lors du décollage ou de l'atterrissage de l'aéronef.

3. Système selon la revendication 2 dans lequel le capteur comprend une première partie (30) et une seconde partie (31) qui sont en contact lorsque le dossier de siège est complètement relevé ; et dans lequel les parties se séparent lorsque le dossier de siège s'incline par rapport à la base de siège.

4. Système selon la revendication 2 ou la revendication 3 comprenant en outre une minuterie (71) ; et un moteur (70), le système de siège étant configuré pour faire fonctionner le moteur de manière à forcer le dossier de siège à adopter une position relevée lorsque la minuterie indique qu'un temps prédéterminé s'est écoulé ou si le capteur détecte que le dossier de siège est incliné lors du décollage ou de l'atterrissage de l'aéronef.
